Europäisches Patentamt

European Patent Office

Office européen des brevets

(19)

(11) Veröffentlichungsnummer: **0 340 595 B1**

## EUROPÄISCHE PATENTSCHRIFT

(45) Veröffentlichungstag der Patentschrift: **30.06.93**

(51) Int. Cl.⁵: **H02P 9/04**

(21) Anmeldenummer: **89107385.0**

(22) Anmeldetag: **24.04.89**

(54) **Verfahren zur Bestimmung von charakteristischen Zeitkonstanten eines motorisch angetriebenen Systems.**

(30) Priorität: **06.05.88 DE 3815597**

(43) Veröffentlichungstag der Anmeldung:
**08.11.89 Patentblatt 89/45**

(45) Bekanntmachung des Hinweises auf die
Patenterteilung:
**30.06.93 Patentblatt 93/26**

(84) Benannte Vertragsstaaten:
**DE ES FR GB IT NL SE**

(56) Entgegenhaltungen:
**US-A- 4 080 559**

**REGELUNGSTECHNIK, Band 26, Nr. 11, November 1978, Seiten 349-353; G. WEIHRICH: "Drehzahlregelung von Gleichstromantrieben unter Verwendung eines Zustands- und Störgrössen-Beobachters"**

(73) Patentinhaber: **SIEMENS AKTIENGESELL-
SCHAFT
Wittelsbacherplatz 2
W-8000 München 2(DE)**

(72) Erfinder: **Böhm, Manfred, Dipl.-Ing.
Wannbach 30
W-8551 Pretzfeld(DE)**
Erfinder: **Papiernik, Wolfgang, Dr.
Eskilstunastrasse 9
W-8520 Erlangen(DE)**

## Beschreibung

Die Erfindung bezieht sich auf ein verfahren zur Bestimmung von charakteristischen Zeitkonstanten eines motorisch angetriebenen Systems wobei eine vom Motor anzutreibende Gesamtmasse physikalisch in eine träge ideal starre Masse des Motors und in ein trage, ideal starre Masse der Last zerlegbar ist, wobei beide Massen über eine Feder verkoppelt sind, wobei die Gesamtmasse regelungstechnisch durch eine Ersatzzeitkonstante, die Masse des Motors durch eine Motorzeitkonstante, die Masse der Last durch eine Lastzeitkonstante, die Feder durch eine Federzeitkonstante und die Dämpfung des Zwei-Massen-Systems durch eine Dämpfungszeitkonstante charakterisierbar ist.

Wellen oder Achsen von motorisch angetriebenen Systemen sind Torsionsspannungen ausgesetzt, die aufgrund der nicht ideal starren Materialeigenschaften der Welle oder Achse zu elastischen Verformungen führen. Physikalisch läßt sich die Antriebseinheit wie zwei, ideal starre Massen betrachten, die durch eine Feder verbunden sind. Dabei kann die eine Masse als träge Masse des Motors, die andere als träge Masse der Last aufgefaßt werden, wobei die Summe beider Massen die Gesamtmasse ergibt. Eine solche Antriebseinheit führt Eigenschwingungen aus, die einerseits die Regelung eines jeweiligen Systems, beispielsweise einer Werkzeugmaschine oder eines Roboters, negativ beeinflußen, andererseits das betroffene Material stark beanspruchen.

Um den steigenden Ansprüchen an die Arbeitsgeschwindigkeit und Bahngenauigkeit - beispielsweise von Robotern, numerisch gesteuerten Maschinen oder ganzen Bearbeitungszentren mit einer Vielzahl von Achsen - zu genügen, werden die Antriebseinheiten mit Zustandsreglern gesteuert, die sich bei entsprechender Parametrierung auch zur Beherrschung der mechanischen Eigenschwingungen eignen.

Anders als beim klassischen PID-Regler kann die Inbetriebnahme von Zustandsreglern nicht mehr nach einfachen Einstellkriterien von Hand vorgenommen werden. Die genaue Kenntnis der Regelparameter ist für die Regleroptimierung von entscheidender Bedeutung.

Aufgabe der Erfindung ist es, die charakteristischen Zeitkonstanten einer jeweiligen Antriebseinheit zu bestimmen. Diese Aufgabe wird gemäß den Merkmalen des kennzeichnenden Teils des Anspruchs 1 gelöst.

Eine vorteilhafte Ausbildung der Erfindung ist dadurch gekennzeichnet, daß der Einfluß eines Stromregelkreises des motorischen Antriebs auf die charakteristischen Zeitkonstanten, bei der Ermittlug der diskreten Gewichtsfunktion berücksichtigt wird. Diese Maßnahme trägt zur Steigerung der Dynamik und der Genauigkeit der Regelung bei.

Der Stromregelkreis kann dabei regelungstechnisch durch ein PT1-Regelglied mit seiner Ankerkreiszeitkonstante beschrieben und die unbeeinflußte Gewichtsfunktion aus der Übertragungsfunktion eines PT1-Regelgliedes bestimmt werden. Die Beschreibung des Stromregelkreises durch ein solches PT1-Glied ist für die meisten Anwendungsfälle hinreichend genau.

Ist die Ankerkreiszeitkonstante unbekannt, so kann sie gemäß einer weiteren vorteilhaften Ausbildung der Erfindung aus der Phasenverschiebung der niedristen Eigenschwindung der vorbestimmten Gewichtsfunktion gegenüber einem Modellsystem bestimmt werden, wobei dem Modellsystem,das mit den vorbestimmten charakteristischen Zeitkonstanten bildbar ist, ein verzögerungsfreier Stromregelkreis zugrundeliegt.

Zur Ausführung des Verfahrens bietet sich eine Vorrichtung an, die dadurch gekennzeichnet, daß in einem vorgebbaren Programmbereich eines numerisch gesteuerten Automaten mit mindestens einem motorisch angetriebenen System, ein Programm integrierbar ist, das bei entsprechender Vorgabe die Verfahrensschritte steuert aus den ermittelten charakteristischen Zeitkonstanten die Regelparameter für einen jeweiligen Regler für jeweils einen motorischen Antrieb berechnet und an diesen übergibt. Ein solches Programm kann zusätzlich zu einem, beispielsweise in einem EPROM abgelegten Betriebsystem der Steuerung einer Werkzeugmaschine oder eines Roboters etc., integriert werden. Bei der Inbetriebnahme eines solchen Automaten kann dann zunächst vom Anwender die Einmeßphase vorgegeben werden, in der die Verfahrensschritte automatisch ablaufen. Diese Einmeßphase kann in regelmäßigen oder unregelmäßigen Zeitabständen wiederholt werden, so daß dem Zustandsregler auch dann genaue charakteristische Zeitkonstanten vorliegen, wenn sich durch Verschleiß oder sonstige Umstände die Verhältnisse am angetriebenen System verändert haben.

Ein Ausführungsbeispiel der Erfindung ist in der Zeichnung dargestellt und wird im folgenden näher erläutert. Dabei zeigen:

FIG 1      eine physikalische Darstellung eines elastisch gekoppelten Zwei-Massen-Systems,
FIG 2      ein regelungstechnisches Ersatzschaltbild eines elastisch gekoppelten Zwei-Massen-Systems,
FIG 3      die Sprungantwort eines elastisch gekoppelten Zwei-Massen-Systems,
FIG 4      die Gewichtsfunktion eines elastisch gekoppelten Zwei-Massen-Systems.

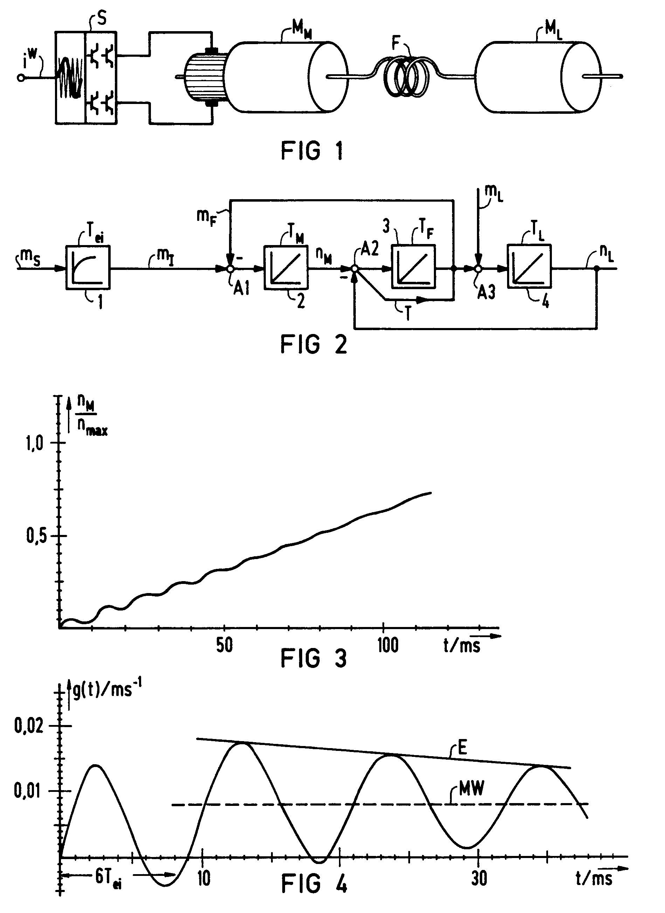

Die Darstellung gemäß FIG 1 zeigt das physikalische Ersatzschaltbild eines Zwei-Massen-Systems mit dem Stromregelkreis S, dem Motor mit der trägen, ideal starren Motormasse $M_M$, der Feder F, und der trägen, ideal starren Masse $M_L$ der Last. Dieses System repräsentiert eine reale, schwingungsfähige Achse, beispielsweise die Achse einer Werkzeugmaschine, die durch einen Motor angetrieben wird und die mit einer Last, beispielsweise in Form eines Fräskopfes, beaufschlagt ist. Die entsprechende mechanische Ausgestaltung ist durch das jeweilige System (Werkzeugmaschine, Roboter, etc.,) vorgegeben. Auf eine beispielhafte Darstellung ist daher verzichtet worden.

Der physikalischen Darstellung des Zwei-Massen-Systems gemäß FIG 1, entspricht das regelungstechnische Ersatzschaltbild in der Darstellung gemäß FIG 2. Im Signalflußplan der FIG 2 ist die Richtung des jeweiligen Signalflusses durch Pfeile angedeutet. Zur Kennzeichnung der wirkungsmäßigen Abhängigkeit des jeweiligen Ausgangssignals vom Eingangssignal ist in jeden Block des Signalflußplans die jeweilige Übergangsfunktion eingezeichnet. Außerdem sind die jeweiligen Blöcke mit ihren charakteristischen Zeitkonstanten bezeichnet. Diese Zeitkonstanten werden im folgenden auch als Bezugszeichen verwendet.

Zwischen den einzelnen Elementen der physikalischen Darstellung des Zwei-Massen-Systems gemäß FIG 1 und den einzelnen Elementen des regelungstechnischen Ersatzschaltbildes des Zwei-Massen-Systems gemäß FIG 2 besteht folgender Zusammenhang: Dem Stromregelkreis S entspricht das Übertragungsglied 1 mit der Ankerkreiszeitkonstanten $T_{ei}$, der Motormasse $M_M$ entspricht das Integrierglied 2 mit der Motorzeitkonstanten $T_M$ der Feder F entspricht das Integrierglied 3 mit der Federzeitkonstanten $T_F$ und der Lastmasse $M_L$ entspricht das Integrierglied 4 mit der Lastzeitkonstanten $T_L$.

Anhand des Signalflußplans in der Darstellung gemäß FIG 2, läßt sich der physikalische Vorgang eines motorisch angetriebenen, elastisch gekoppelten Zwei-Massen-Systems folgendermaßen beschreiben. Wird dem Motor ein Sollmoment $m_S$ zugeführt, so resultiert daraus ein der Motorcharakteristik entsprechendes Motor-Istmoment $m_I$, das zu einer Drehbewegung des Motors führt. Bedingt durch die Elastizität der Antriebswelle wirkt dem Motor-Istmoment $m_I$ ein Federmoment $m_F$, wie am Addierglied A1 gezeigt, entgegen. Am Ausgang des Integriergliedes 2 läßt sich dann eine, dem resultierenden Antriebsmoment entsprechende Ist-Drehzahl $n_M$ der Motorwelle abgreifen. Diese Ist-Drehzahl $n_M$ der Motorwelle ist jedoch nicht identisch mit der Ist-Drehzahl $n_L$ der Lastwelle. Bleibt man bei der physikalischen Betrachtungsweise von zwei starren Massen und einer beide Massen elastisch verbindenden Feder F, so wird sich beim Anlaufen des Motors zunächst die Feder spannen und erst dann wird sich Zeit- und Lageverzögert die Lastwelle mitdrehen. Am Addierer A2 ergibt sich damit eine Differenzdrehzahl zwischen der Ist-Drehzahl der Motormasse $n_M$ und der Ist-Drehzahl $n_L$ der Lastmasse $m_L$. Diese Differenzdrehzahl ist ursächlich, daß sich an der Feder F ein Federmoment einstellt. Bedingt durch das Federmoment $m_F$ beginnt das elastisch gekoppelte Zwei-Massen-System zu schwingen.

Um diese Schwingungen mit Hilfe eines Zustandsreglers, der für die Regelung des elastish gekoppelten Zwei-Massen-Systems eingesetzt wird, zu bedämpfen, müssen diesem Zustandsregler die charakteristischen Zeitkonstanten, also die Motorzeitkonstante $T_M$, die Federzeitkonstante $T_F$, die Lastzeitkonstante $T_L$ und die Dämpfungszeitkonstante T als Parameter zur Verfügung stehen.

Mittels eines vorgegebenen Programms in der numerischen Steuerung, beispielsweise eines Roboters oder einer Werkzeugmaschine, läßt sich von einem Anwender eine Einmeßphase auslösen. Dabei kann beispielsweise ein Hochlaufvorgang ausgeführt werden, wobei dem Motor ein konstantes Motorsollmoment $m_S$ zugeführt wird.

Mittels eines, bei handelsüblichen Maschinen sowieso vorhandenen Meßgebers, der beispielsweise am Motor angebracht ist, kann dann in bestimmten diskreten Zeitabständen die Drehzahl des Systems gemessen werden. Damit erhält man als Funktion die Drehzahl über der Zeit. In der systemtheoretischen Terminologie heißt die so gewonnene Funktion auch Sprungantwort.

Die Darstellung gemäß FIG 3 zeigt eine solche Sprungantwort eines elastisch gekoppelten Zwei-Massen-Systems. Dabei ist auf der Ordinate die auf die Maximaldrehzahl $n_{max}$ normierte MotorIstdrehzahl $n_M$ aufgetragen, auf der Abszisse die Zeit t in Millisekunden. Deutlich ist zu erkennen, daß sich der linear ansteigenden Drehzahl $n_M/n_{max}$ die Eigenschwingungen des Systems überlagern.

Die erste Ableitung der Sprungantwort gemäß FIG 3 nach der Zeit ergibt die sogenannte Gewichtsfunktion g(t). Da die Sprungantwort jedoch nicht als kontinuierliche, sondern als diskrete Funktion vorliegt, kann die diskrete Gewichtsfunktion durch Differenzenbildung der Abtastwerte der Sprungantwort gebildet werden.

In der Darstellung gemäß FIG 4 ist die Gewichtsfunktion g(t) als kontinuierliche Funktion dargestellt. In der numerischen Steuerung liegt diese Funktion als diskrete Gewichtsfunktion g(k) vor. Der Mittelwert MW (gestrichelt gezeichnet) der Gewichtsfunktion ist direkt proportional zur Ersatzzeitkonstanten $T_E$ des ZweiMassen-Systems, so daß die Ersatzzeitkonstante $T_E$ aus der gemessenen Gewichtsfunktion beispielsweise mittels der Methode der kleinsten Quadrate bestimmt werden kann, nachdem der Einschwingvorgang weitgehend abgeklungen ist. Zwischen der Lastzeitkonstante $T_L$, der Motorzeitkonstante $T_M$, der Ersatzzeitkonstante $T_E$, dem Motorsollmoment $m_S$ und dem Motorsollmoment $m_{max}$ bei der Maximaldrehzahl besteht dabei folgender Zusammenhang:

$$(m_S/m_{max})/(T_M + T_L) = (m_S/m_{max})/T_E. \qquad \text{GL. (1)}$$

Wie aus der Einhüllenden E der Gewichtsfunktion g(t) zu sehen ist, klingt die Eigenschwingung des Zwei-Massen-Systems nach einer Einschwingphase exponentiell ab. Um die Dämpfungszeitkonstante T, mit der die niedrigste Eigenschwingung des Zwei-Hassen-Systems exponentiell abklingt zu bestimmen, wird zunächst eine erste Kurzzeitspektralanalyse aus den ersten M-Werten durchgeführt und daraus der Betrag der dominierenden Eigenschwingung des Systems ermittelt. Der in FIG 4 erkennbare Einschwingvorgang kann bei Verwendung von Transistorstellgliedern und für Frequenzen kleiner als 200 Hz vernachlässigt werden oder andernfalls durch Anwendung der Verfahrensschritte 1 bis 3 berücksichtigt werden. Danach wird eine zweite Kurzzeitspektralanalyse aus weiteren M-Werten der diskreten Gewichtsfunktion ermittelt, wobei der erste Wert der weiteren M-Werte gegenüber dem ersten Wert der ersten M-Werte um ein ganzzahliges Vielfaches der Periode der dominierenden Eigenschwingung verschoben ist. Aus der Differenz der beiden durch die Kurzzeitspektralanalyse ermittelten Beträge der Spektrallinien, läßt sich die Dämpfungszeitkonstante gemäß dem Verfahrensschritt e) nach Gleichung (2) bestimmen:

$$T = (- k * T_{abt})/(\ln(|P_2(fe)|/|P_1(fe)|)). \qquad \text{GL. (2)}$$

Dabei bedeutet "$k * T_{abt}$" den diskreten Zeitpunkt des ersten Meßwertes der zweiten Kurzzeitspektralanalyse, "ln" den natürlichen Logarithmus, "$P_2(f_e)$", "$P_1(f_e)$" die Intensität der Eigenschwingung bei der zweiten bzw. bei der ersten Kurzzeitspektralanalyse.

Für die Bestimmung der verbleibenden charakteristischen Zeitkonstanten, also der Lastzeitkonstante $T_L$ und der Motorzeitkonstante $T_M$ wird aus den gemessenen Werten die Amplitude a der Eigenschwingung bestimmt und mit der theoretischen Amplitude, die sich aus der Übertragungsfunktion der regelungstechnischen Struktur gemäß FIG 2 ergibt, ins Verhältnis gesetzt. Es ergeben sich folgende Gleichungen zur Bestimmung der Lastzeitkonstante $T_L$:

$$A = T_L/(2 * Pi * f_e)/(T_M(T_L + T_M)) * C \qquad \text{Gl.(3)}$$

mit

$$C = m_S/m_{max} \qquad \text{Gl.(3a)}$$
$$T_E = T_L + T_M \qquad \text{Gl.(4)}$$

Dabei bedeutet $f_e$ die Frequenz der niedrigsten Eigenschwingung des elastisch gekoppelten Zwei-Massen-Systems, und Pi ist die Ludolfsche Zahl. Die Konstante C entspricht der Sprungerregung des Systems, die nach Gleichung (3a) aus dem Quotienten eines Motorsollmoments $m_S$, das auf den Regelkreis gemäß FIG 2 gegeben wird zum resultierenden Motorsollmoment $m_{max}$ bestimmbar ist. Die Sprungerregung kann aber auch nach anderen, dem Fachmann bekannten Methoden bestimmt werden.

Aus den so bestimmten charakteristischen Zeitkonstanten $T_L, T_M, T_F, T$ können für einen jeweiligen Zustandsregler die Regelparameter berechnet und beispielsweise in einem Arbeitsspeicher abgelegt werden, von wo sie der jeweilige Zustandsregler abfragen kann, oder sie werden direkt nach ihrer Bestimmung dem Zustandsregler zugeführt.

Die Motorzeitkonstante $T_M$, die Lastzeitkonstante $T_L$ und die Federzeitkonstante $T_F$ sind noch durch den Einfluß des Stromregelkreises 1 verfälscht, der sich auf die Intensität der Eigenschwingung im Kurzzeitspekturm auswirkt. Er kann in der Praxis bei Verwendung von Transistorstellern durch ein PT1-Glied mit einer charakteristischen Zeitkonstanten $T_{ei}$ von 0,5 msec bis 1 msec hinreichend genau beschrieben werden. Aus der Z-Übertragungsfunktion eines PT1-Gliedes ("$H_{PT1}(z)$") kann dann eine von der Ankerkreiszeitkonstanten unbeeinflußte Gewichtsfunktion g(k) nach folgender Formel bestimmt werden:

$$x(n) = y(n+1)/(1-c) - y(n) * c/(1-c) \qquad \text{Gl. (5)}$$

mit

$$c = \exp(-T_{abt}/T_{ei}) \qquad \text{Gl. (6)}$$

wobei $T_{abt}$ die Abtastzeit der diskreten Gewichtsfunktion und $T_{ei}$ die Ankerkreiszeitkonstante darstellen.

Ist die Ankerkreiszeitkonstante $T_{ei}$ unbekannt, so läßt sich diese aus der Phasenverschiebung der niedrigsten Eigenschwingung der vorbestimmten Gewichtsfunktion g(k) gegenüber einem Modellsystem bestimmen, wobei dem Modellsystem - das mit den vorbestimmten charakteristischen Zeitkonstanten bildbar ist - ein verzögerungsfreier Stromregelkreis zugrunde gelegt wird.

**Patentansprüche**

1. Verfahren zur Bestimmung von charakteristischen Zeitkonstanten eines motorisch angetriebenen Systems wobei eine vom Motor anzutreibende Gesamtmasse physikalisch in eine träge, ideal starre Masse des Motors und in eine träge, ideal starre Masse der Last zerlegbar ist, wobei beide Massen über eine Feder verkoppelt sind, wobei die Gesamtmasse regelungstechnisch durch eine Ersatzzeitkonstante, die Masse des Motors durch eine Motorzeitkonstante, die Masse der Last durch eine Lastzeitkonstante, die Feder durch eine Federzeitkonstante und die Dämpfung des ZweiMassen-Systems durch eine Dämpfungszeitkonstante charakterisierbar ist, **gekennzeichnet** durch die folgenden Merkmale

a) während einer Einmeßphase wird eine diskrete Gewichtsfunktion (g(k)) des Sytems bestimmt, die der zeitlichen Ableitung der Sprungantwort des Systems entspricht und dem Abasttheorem genügt,

b) die Ersatzzeitkonstante ($T_E$) wird unter Berücksichtigung eines proportionalen Faktors aus dem Mittelwert der Gewichtsfunktion (g(k)) bestimmt,

c) mittels diskreter Fouriertransformation wird ein erster Betrag sowie die Frequenz der dominierenden Eigenschwingung durch eine erste Kurzzeitspektralanalyse aus den ersten M-Werten der diskreten Gewichtsfunktion (g(k)) ermittelt,

d) mittels diskreter Fouriertransformation wird ein zweiter Betrag der gleichen Eigenschwingung durch eine zweite Kurzzeitspektralanalyse aus weiteren M-Werten der diskreten Gewichtsfunktion (g(k)) ermittelt, wobei der erste Wert der weiteren M-Werte gegenüber dem ersten Wert der ersten M-Werte um ein ganzzahliges Vielfaches der Periode dieser Eigenschwingung verschoben ist,

e) die Dämpfungszeitkonstante (T) mit der die niedrigste Eigenschwingung des Zwei-Massen-Systems exponentiell abklingt, wird aus dem Verhältnis des diskreten Zeitpunktes des ersten Wertes der weiteren M-Werte zum natürlichen Logarithmus des Quotienten aus dem zweiten Betrag zum ersten Betrag der Eigenschwingung bestimmt,

f) die Amplitude A der Eigenschwingung wird aus dem Quotienten des ersten Betrags der Eigenschwingung des Zwei-Massen-Systems zu einem dritten Betrag eines Frequenzspektrums bestimmt, wobei sich der dritte Betrag aus einer Sinusschwingung der Amplitude "Eins" ergibt, die mit der vorbestimmten Dämpfungszeitkonstante (T) abklingt,

g) aus der Amplitude A und der Frequenz der Eigenschwingung sowie aus der Ersatzzeitkonstante ($T_E$) sind die Motorzeitkonstanten ($T_M$), die Lastzeitkonstanten ($T_L$) und die Federzeitkonstanten ($T_F$) über folgende Beziehungen bestimmbar:

$$A = \frac{T_L}{2Pi * f_e * T_M * (T_L + T_M)} * C$$

$T_E = T_L + T_M,$
$2Pi * f_e = \text{sqrt}\left((1/T_M + 1/T_L) * 1/T_F - 1/T^2\right)$

wobei $f_e$ die Frequenz der niedrigsten Eigenschwingung des elastisch gekuppelten Zwei-Massen-Systems und Pi die Ludolfsche Zahl ist. Die Konstante C entspricht der Sprungerregung des Systems.

2. Verfahren nach Anspruch 1, **dadurch gekennzeichnet,** daß der Einfluß eines Stromregelkreises des motorischen Antriebs auf die charakteristischen Zeitkonstanten ($T_M$,$T_L$,$T_F$,T), bei der Ermittlung der diskreten Gewichtsfunktion (g(k)) berücksichtigt wird.

3. Verfahren nach Anspruch 2, **dadurch gekennzeichnet,** daß der Stromregelkreis regelungstechnisch durch ein PT1-Regelglied (PT1) mit der Ankerkreiszeitkonstanten ($T_{ei}$) beschreibbar ist und die unbeeinflußte Gewichtsfunktion (g(k)) aus der Übertragungsfunktion eines PT1-Regelgliedes (PT1) bestimmbar ist.

4. Verfahren nach Anspruch 3, **dadurch gekennzeichnet,** daß die Ankerkreiszeitkonstante ($T_{ei}$) des Stromregelkreises aus der Phasenverschiebung phi($f_e$) = arctan ($fT_{ei}$) der niedrigsten Eigenschwingung der vorbestimmten Gewichtsfunktion (g(k)) gegenüber einem Modellsystem bestimmbar ist, wobei dem Modellsystem, das mit den vorbestimmten charakteristischen Zeitkonstanten bildbar ist, ein verzögerungsfreier Stromregelkreis zugrundeliegt.

5. Vorrichtung zur Ausführung des Verfahrens nach mindestens einem der Ansprüche 1 bis 4, **dadurch gekennzeichnet,** daß in einem vorgebbaren Programmbereich eines numerisch gesteuerten Automaten mit mindestens einem motorisch angetriebenen System, ein Programm integrierbar ist, daß bei entsprechender Vorgabe die Verfahrensschritte steuert aus den ermittelten charakteristischen Zeitkonstanten die Regelparameter für einen jeweiligen Regler für jeweils einen motorischen Antrieb berechnet und an diesen übergibt.

**Claims**

1. Method for determining characteristic time constants of a motor-driven system, in which a total mass to be driven by the motor can be split up physically into an inert, ideally rigid mass of the motor and into an inert, ideally rigid mass of the load, with both masses being coupled by way of a spring, with it being possible to characterise the total mass in terms of control engineering by an equivalent time constant, the mass of the motor by a motor time constant, the mass of the load by a load time constant, the spring by a spring time constant and the damping of the two-mass system by a damping time constant, characterised by the following features
    a) during a calibrating phase a discrete weighting function (g(k)) of the system is determined, which function corresponds to the derivative with respect to time of the step-function response of the system and satisfies the sampling theorem;
    b) the equivalent time constant ($T_E$) is determined, allowing for a proportional factor, from the mean value of the weighting function (g(k));
    c) by means of a discrete Fourier transformation a first magnitude and also the frequency of the dominating natural oscillation are determined by means of a first short-time spectral analysis from the first M-values of the discrete weighting function (g(k));
    d) by means of a discrete Fourier transformation a second magnitude of the same natural oscillation is determined by means of a second short-time spectral analysis from further M-values of the discrete weighting function (g(k)), with the first value of the further M-values being shifted in respect of the first value of the first M-values by an integral multiple of the period of this natural oscillation;
    e) the damping time constant (T), with which the lowest natural oscillation of the two-mass system exponentially dies out, is determined from the ratio of the discrete instant of the first value of the further M-values to the natural logarithm of the ratio of the second magnitude to the first magnitude of the natural oscillation;
    f) the amplitude A of the natural oscillation is determined from the ratio of the first magnitude of the natural oscillation of the two-mass system to a third magnitude of a frequency spectrum, with the third magnitude resulting from a sinusoidal oscillation of the amplitude "one" which dies out with the predetermined damping time constant (T);
    g) the motor time constants ($T_M$), the load time constants ($T_L$) and the spring time constants ($T_F$) can be determined from the amplitude A and the frequency of the natural oscillation and also from the equivalent time constant ($T_E$) by way of the following relationships:

$$A = \frac{T_L}{2Pi * f_e * T_M * (T_L + T_M)} * C$$

$T_E = T_L + T_M,$
$2Pi * f_e = \text{sqrt} ((1/T_M + 1/T_L) * 1/T_F - 1/T^2)$

where $f_e$ is the frequency of the lowest natural oscillation of the elastically coupled two-mass system and Pi the Ludolf's number. The constant C corresponds to the step-function excitation of the system.

2. Method according to claim 1, characterised in that the influence of a current-control circuit of the motor drive on the characteristic time constants ($T_M$, $T_L$, $T_F$, T) is taken into consideration when determining the discrete weighting function (g(k)).

3. Method according to claim 2, characterised in that the current-control circuit can be described in terms of control engineering by means of a first-order time-delay control element (PT1) with the armature-circuit time constants ($T_{ei}$), and the uninfluenced weighting function (g( k)) can be determined from the transfer function of a first-order time-delay control element (PT1).

4. Method according to claim 3, characterised in that the armature-circuit time constant ($T_{ei}$) of the current-control circuit can be determined from the phase shift phi($f_e$) = arctan ($fT_{ei}$) of the lowest natural oscillation of the predetermined weighting function (g(k)) in respect of a model system, with a delay-free current-control circuit forming the basis of the model system which can be formed with the predetermined characteristic time constants.

5. Arrangement for carrying out the method according to at least one of the claims 1 to 4, characterised in that a program can be integrated in a preselectable program area of a numerically controlled automatic machine having at least one motor-driven system, which program, in the case of corresponding preselection, controls the method steps, computes from the determined characteristic time constants the control parameters for a respective controller for respectively one motor drive and delivers (them) to the latter.

**Revendications**

1. Procédé pour déterminer des constantes de temps caractéristiques d'un système entraîné par un moteur, selon lequel une masse totale devant être entraînée par le moteur peut être subdivisée physiquement en une masse inerte et idéalement rigide du moteur et une masse inerte et idéalement rigide de la charge, les deux masses étant couplées par l'intermédiaire d'un ressort, et la masse totale peuvent être caractérisée, du point de vue de la technique de régulation, par une constante de temps équivalente, alors que la masse du moteur peut être caractérisée par une constante de temps du moteur, la masse de la charge peut être caractérisée par une constante de temps de la charge, le ressort peut être caractérisé par une constante de temps du ressort et l'amortissement du système à deux masses peut être caractérisé par une constante de temps d'amortissement, caractérisé par les particularités suivantes

a) pendant une phase de mesure, une fonction discrète de pondération (g(k)) du système est déterminée, fonction qui correspond à la dérivée dans le temps de la réponse échelon du système et satisfait au théorème d'échantillonnage,

b) la constante de temps équivalente ($T_E$) est déterminée en tenant compte du facteur proportionnel à partir de la valeur moyenne de la fonction de pondération (g(k)),

c) au moyen d'une transformation de Fourier discrète, une première valeur ainsi que la fréquence de l'oscillation propre dominante sont déterminées au moyen d'une première analyse spectrale de brève durée à partir des premières valeurs M de la fonction discrète de pondération (g(k)),

d) au moyen d'une transformation de Fourier discrète, une seconde valeur de l'oscillation propre est déterminée au moyen d'une seconde analyse spectrale de brève durée à partir d'autres valeurs M de la fonction discrète de pondération (g(k)), la première valeur des autres valeurs M étant décalée, par rapport à la première valeur des premières valeurs M, d'un multiple entier de la période de cette oscillation propre,

e) la constante de temps d'amortissement (T), avec laquelle l'oscillation propre la plus basse du système à deux masses diminue exponentiellement, est déterminée à partir du rapport de l'instant discret de la première valeur des autres valeurs M au logarithme naturel du quotient de la seconde valeur à la première valeur de l'oscillation propre,

f) l'amplitude A de l'oscillation propre est déterminée à partir du quotient de la première valeur de l'oscillation propre du système à deux masses par une troisième valeur d'un spectre de fréquence, la troisième valeur étant déterminée à partir d'une oscillation sinusoïdale de l'amplitude "un", qui diminue avec la constante de temps d'amortissement (T) prédéterminée,

g) les constantes de temps ($T_M$) du moteur, les constantes de temps ($T_L$) de la charge et les constantes de temps ($T_F$) du ressort peuvent être déterminées à partir de l'amplitude A et de la fréquence de l'oscillation propre ainsi qu'à partir de la constante de temps équivalente ($T_E$), conformément aux relations suivantes :

$$A = \frac{T_L}{2Pi * f_e * T_M * (T_L + T_M)} * C$$

$T_E = T_L + T_M,$
$2Pi * f_e = sqrt((1/T_M + 1/T_L) * 1/T_F - 1/T^2)$

$f_e$ représentant la fréquence de l'oscillation propre la plus basse du système à deux masses à couplage élastique, et Pi représentant le nombre de Ludolf, et la constante C correspondant à l'excitation échelon du système.

2. Procédé suivant la revendication 1, caractérisé par le fait que l'influence d'un circuit de régulation du courant du dispositif d'entraînement à moteur sur les constantes de temps caractéristiques ($T_M$, $T_L$, $T_F$, T) est prise en compte lors de la détermination de la fonction discrète de pondération (g(k)).

3. Procédé suivant la revendication 2, caractérisé par le fait que le circuit de régulation de courant peut être décrit, du point de vue de la technique de régulation, par un circuit de régulation PT1 (PT1) possédant la constante de temps ($E_{ei}$) du circuit d'induit et la fonction de pondération (g(k)) non influencée peut être déterminée à partir de la fonction de transmission d'un circuit de régulation PT1 (PT1).

4. Procédé suivant la revendication 3, caractérisé par le fait que la constante de temps ($T_{ei}$) du circuit d'induit du circuit de régulation du courant peut être déterminée à partir du déphasage phi($f_e$) = arctan ($fT_{ei}$) de l'oscillation propre la plus basse de la fonction de pondération (g(k)) prédéterminée par rapport à un système modèle, un circuit de régulation de courant sans retard étant pris pour base du système modèle, qui peut être formé avec les constantes de temps caractéristiques prédéterminées.

5. Dispositif pour la mise en oeuvre du procédé suivant au moins l'une des revendications 1 à 4, caractérisé par le fait que dans une gamme pouvant être prédéterminée de programme d'un automate à commande numérique comportant au moins un système entraîné par un moteur, un programme peut être intégré, qui, pour une prédétermination correspondante, commande les étapes opératoires à partir des constantes de temps caractéristiques déterminées, calcule les paramètres de régulation pour un régulateur respectif pour respectivement un dispositif d'entraînement à moteur et les transmet à ce dispositif d'entraînement.

FIG 1

FIG 2

FIG 3

FIG 4